# EUROPEAN PATENT APPLICATION

(11) **EP 2 846 240 A1**
(43) Date of publication of application: **11.03.2015**
(21) Application number: 13004381.3
(22) Date of filing: 09.09.2013
(51) Int. Cl.: G06F 3/0482, G06F 3/0485

(54) **Graphical user interface for browsing a list of visual elements**

(71) Applicant: Swisscom AG, 3050 Bern (CH)
(72) Inventor: Marti, Urs-Viktor, 3053 Münchenbuchsee (CH); Schnepp, Alexander, 50969 Köln (DE); Schradt, Alexander, 8117 Fällanden (CH)
(74) Representative: Rentsch Partner AG

(57) **Abstract**

A graphical user interface (1) for browsing a list of visual elements (n-2, n-1, n, n+1, n+2) is configured to display consecutive visual elements of the list by displaying one of the consecutive visual elements, selected as focus element (n), in a focus area (20) of the graphical user interface (1), and display the consecutive visual elements (n-2, n-1, n+1, n+2), preceding or following the focus element (n) in the list, as non-focus elements outside the focus area (20) at display positions arranged along two or more presentation lines (l1, l2, l3) running through the focus area (20). The display positions are representative of a visual element's position in the list with respect to the focus element (n). When the focus is moved, a different visual element (n-1, n+1) is displayed in the focus area (20) and the remaining visual elements in the list are displayed with rearranged display positions.

## Description

### Field of the Invention

The present invention relates to a graphical user interface for browsing a list of visual elements and to a method of controlling a graphical user interface for browsing the list of visual elements.

### Background Art

Various solutions are known in the field of graphical user interfaces for browsing visual elements. Some of these solutions lower the cognitive burden of a user performing computer interactions and have the technical effect of a more efficient man-machine interface. Hence, efficiency of a graphical user interface is improved to some extent.

Document EP 2 509 074 discloses displaying a large volume of image data. A band region is generated distinctly on a background image for a list display, and thumbnail images of the image data stored in a database are displayed on the band region. The band region can be changed freely by the user by pressing the buttons of a mouse or controller. Larger thumbnail images for an image with larger numbers of pixels may be displayed.

Document US 2007/0035513 discloses arranging several icons in a circle, each circle including an image of a person. When the user selects a left key or a right key, a top left icon is exchanged with adjacent icons. Thus, the top left icon is moved through the circle of icons.

Document US 2012/0017152 relates to tools for creating a variety of media content. A graphical interface is created for designers to digitally manipulate graphical representations of the media content to produce desired results. The graphical representations are arranged in several lines and may overlap.

Document US 2012/0221974 relates to presenting a plurality of graphical display elements, providing an interface such as for purchasing or renting media content. Elements are arranged on several lines. Focus of an element may be selected causing the element to be displayed with increased size.

### Disclosure of the Invention

It is an object of the present invention to provide a graphical user interface for browsing a list of visual elements, which does not have at least some of the disadvantages of the prior art. In particular, it is an object of the present invention to provide a graphical user interface for browsing a large number of visual elements with improved efficiency.

According to the present invention, these objects are achieved through the features of the independent claims. In addition, further advantageous embodiments follow from the dependent claims and the description.

According to the present invention, the above-mentioned objects are particularly achieved in that a graphical user interface for browsing a list of visual elements is configured to display a plurality of consecutive visual elements of the list by displaying one of the consecutive visual elements, selected as focus element, in a focus area of the graphical user interface. The consecutive visual elements, which precede or follow the focus element in the list, are displayed as non-focus elements outside the focus area at display positions arranged along two or more presentation lines running through the focus area. The display positions relative to the focus area are representative of a visual element's position in the list with respect to the focus element. The graphical user interface is further configured to receive user input which moves focus to a different visual element, and to display, in response to the user input, the different visual element in the focus area and the consecutive visual elements, preceding or following the different visual element in the list, as non-focus elements outside the focus area at rearranged display positions along the presentation lines. The rearranged display positions relative to the focus area are representative of a visual element's position in the list with respect to the different visual element. By displaying the visual elements on multiple lines, a large number of visual elements can be perceived by a user at the same time, substantially more than would be possible on one single presentation line. When the visual elements are displayed, after the focus has moved to a different visual element, the visual elements preceding and following the focus element are still perceived by the user of the graphical user interface with their respective order within the list of visual elements as well as with respect to the position of the newly selected focus element. Accordingly, the graphical user interface makes it possible to browse through a large list of visual elements while at the same time perceiving their respective order. Specifically, the graphical user interface is implemented by a processor which is connected to and controls a display device.

In an embodiment, the graphical user interface is further configured to arrange the non-focus elements in a cyclical fashion on the presentation lines. A cycle is defined by the number of presentation lines and a corresponding number of consecutive visual elements in the list, which are each arranged on a different one of the presentation lines using a defined order. In a linear order, for example, the visual elements that are not in focus are assigned consecutively to the next neighboring presentation line in a given direction, until there is no further neighboring presentation line in that direction and the visual element is assigned to the presentation line located the farthest in the opposite direction. In case of only two presentation lines, consecutive visual elements are assigned alternately to the two neighboring presentation lines. In case of more than two horizontal lines, for example, consecutive visual elements are assigned beginning with the bottom line, for example, then the next higher line, etc., until the top line is reached and a new cycle is started by assigning the next visual element in the list to the bottom line. Thus, the order of the visual elements in the list is represented graphically not only in one direction or dimension (in the direction of the presentation lines), but in two directions or dimensions (in the direction of and across the presentation lines).

In a further embodiment, the graphical user interface is further configured to display the non-focus elements with a distance to the focus element that reflects for a particular visual element its position in the list with respect to the focus element. The distance increases with every position farther from the focus element in the list of visual elements. Arranging the visual elements with a distance to the focus element that corresponds to an element's relative position in the list makes it possible for the user to perceive easily an elements position in the list relative to the focus element and other elements in the list. By further arranging the non-focus elements in a cyclical fashion on the presentation lines, the order of the visual elements in the list is represented graphically in two directions or dimensions, while the distance of the non-focus elements to the focus element indicates a particular element's relative position in the list; thus, the display area is used efficiently to present to the user a larger number of visual elements than would be possible on one single presentation line, while still making it possible for the user to recognize easily and clearly the order and relative positions of the visual elements in the list.

In a further embodiment, the graphical user interface is further configured to move focus, in response to the user input, to the visual element directly preceding or directly following the focus element. For example, the graphical user interface is configured to receive from the user a "shift focus left" or "shift focus right" command, respectively, and to rearrange the visual elements accordingly along the presentation lines with respect to the newly selected focus element. The graphical user interface is therefore adapted for browsing or scrolling efficiently through a large list of visual elements, in a user specified direction (e.g. left, right, up, down), while enabling the user to perceive the order of the visual elements at any time.

In a further embodiment, the graphical user interface is further configured to move focus, in response to the user input, to a selected one of the non-focus elements. Thus, the graphical user interface is configured to receive from the user a "set focus" or "select element for focus" command, and to rearrange the visual elements accordingly along the presentation lines with respect to the newly selected focus element. The graphical user interface is therefore adapted to change focus efficiently to any user selected element in a large list of visual elements, while enabling the user to perceive the order of the visual elements at any time.

In an embodiment, the graphical user interface is configured to display the focus element in a focus area positioned in a central location of the graphical user interface, with a size larger than that of the non-focus elements.

In an embodiment, the graphical user interface is configured to display the focus element at display positions arranged along essentially parallel presentation lines in a partially overlapping fashion. For example, the presentation lines have an essentially horizontal or vertical orientation.

In another embodiment, the graphical user interface is further configured to receive a user input which deletes the focus element in the list and moves focus to an adjacent visual element, directly preceding or directly following the focus element prior to its deletion, and to display, in response to the user input, said adjacent visual element in the focus area and the remaining consecutive visual elements, preceding or following said adjacent visual element in the list, as non-focus elements outside the focus area.

In addition to a graphical user interface for browsing a list of visual elements, the present invention relates to method of controlling a graphical user interface for browsing a list of visual elements, the method comprising: displaying a plurality of consecutive visual elements of the list by displaying one of the consecutive visual elements, selected as focus element, in a focus area of the graphical user interface, and displaying the consecutive visual elements, preceding or following the focus element in the list, as non-focus elements outside the focus area at display positions arranged along two or more presentation lines running through the focus area, the display positions relative to the focus area being representative of a visual element's position in the list with respect to the focus element; receiving a user input which moves focus to a different visual element; and displaying, in response to the user input, the different visual element in the focus area and the consecutive visual elements, preceding or following the different visual element in the list, as non-focus elements outside the focus area at rearranged display positions on the presentation lines, the rearranged display positions relative to the focus area being representative of a visual element's position in the list with respect to the different visual element. Specifically, the method is computer implemented and comprises a processor, which is connected to and controls a display device, performing the steps of the method of controlling a graphical user interface for browsing a list of visual elements.

Moreover, the invention further relates to a computer program product comprising a non-transitory computer-readable medium having stored thereon computer program code for controlling one or more processors such that the processors generate a graphical user interface for browsing a list of visual elements, the graphical user interface configured to: display a plurality of consecutive visual elements of the list by displaying one of the consecutive visual elements, selected as focus element, in a focus area of the graphical user interface, and displaying the consecutive visual elements, preceding or following the focus element in the list, as non-focus elements outside the focus area at display positions arranged along two or more presentation lines running through the focus area, the display positions relative to the focus area being representative of a visual element's position in the list with respect to the focus element; receive a user input which moves focus to a different visual element; and display, in response to the user input, the different visual element in the focus area and the consecutive visual elements, preceding or following the different visual element in the list, as non-focus elements outside the focus area at rearranged display positions on the presentation lines, the rearranged display positions relative to the focus area being representative of a visual element's position in the list with respect to the different visual element.

### Brief Description of the Drawings

The herein described invention will be more fully understood from the detailed description given herein below and the accompanying drawings which should not be considered limiting to the invention described in the appended claims. The drawings are showing:
- Fig. 1: schematically a graphical user interface for a list of visual elements;
- Fig. 2: schematically the graphical user interface after receipt of a shift left command, starting from Fig. 1;
- Fig. 3: schematically the graphical user interface after receipt of a shift right command, starting from Fig. 1;
- Fig. 4: schematically the graphical user interface after receipt of a delete right command, starting from Fig. 1;
- Fig. 5: schematically a graphical user interface having visual elements arranged and displayed on three presentation lines;
- Fig. 6a, 6b: schematically each a graphical user interface having visual elements displayed in an overlapping fashion, before and after having moved focus to a new focus element;
- Fig. 7: a block diagram of a computerized device comprising a display and a processor for generating and controlling a graphical user interface for browsing a list of visual elements; and
- Fig. 8: a flow diagram of an exemplary sequence of steps performed by a computerized device for generating and controlling a graphical user interface for browsing a list of visual elements.

### Mode(s) for carrying out the invention

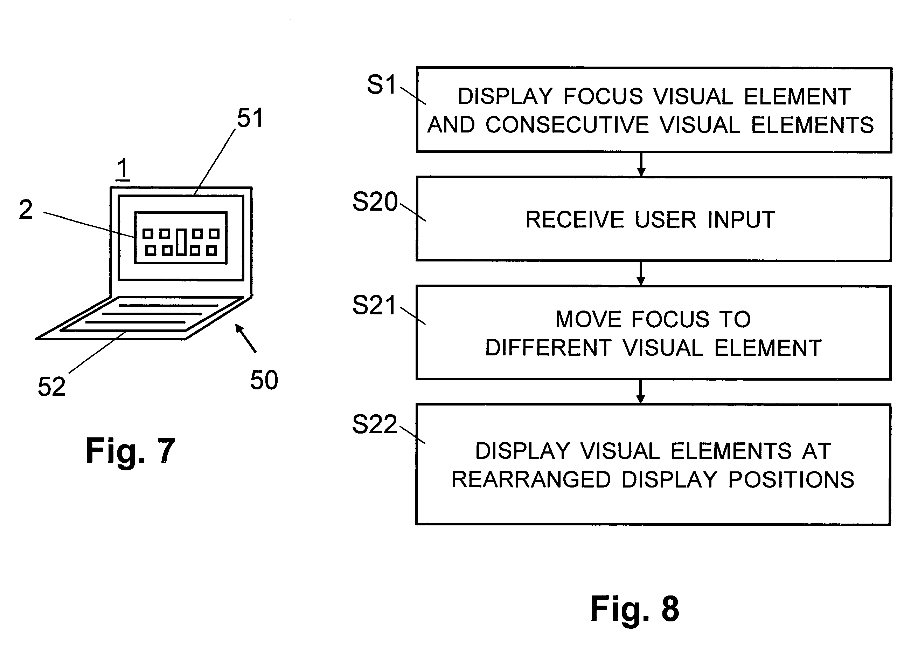

In Figure 7, reference numeral 50 refers to computerized device comprising a display 51, an input device 52, and one or more processors connected to the display 51 and the input device 52 and configured to control the display 51, e.g. responsive to user input received from the input device 52. The input device 52 includes a keyboard, a touchpad, a touch screen and/or a remote control or another device recognizing user gestures. For example, the display 51 is implemented as an LED, LCD or another visual display. For example, the computerized device 50 is implemented as a personal, mobile, laptop and/or tablet computer; a mobile telephone or other communication device; a television apparatus with a remote control; or another computerized device comprising a display 51, an input device 52 and at least one processor, e.g. a head-up display or a head-mounted display with voice control, etc. The computerized device 50 or its processors, respectively, are configured to generate on the display 51 a graphical user interface 1 and to control the graphical user interface 1, in response to user input received via the input device 52. Figure 7 further shows the processor-controlled graphical user interface 1 implemented on the computerized device 50 in a display area 2 of the display 51 of the computerized device 50.

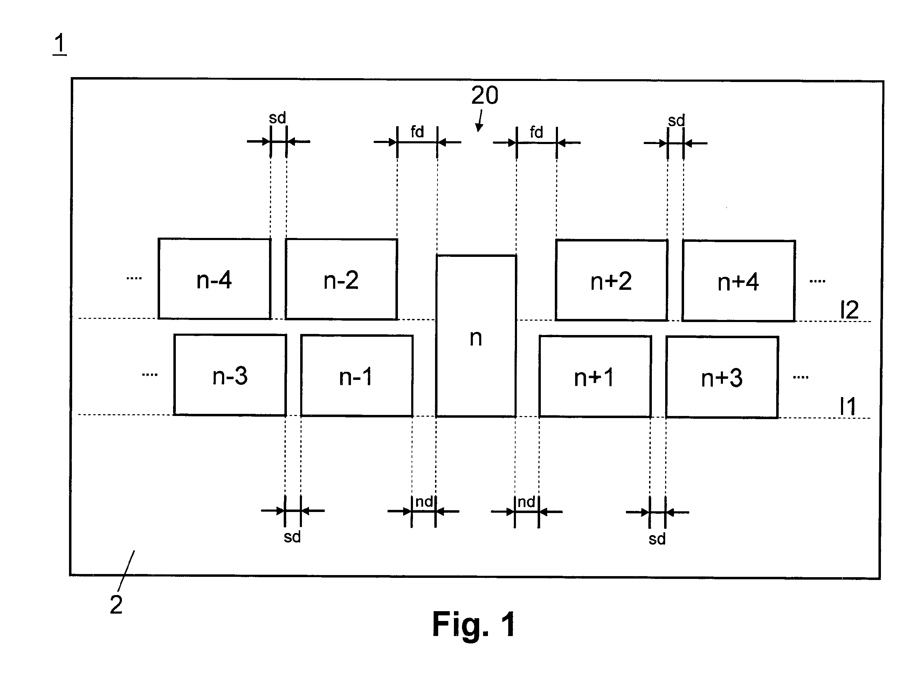

Figure 1 shows the graphical user interface 1 displayed on display area 2. The graphical user interface 1 is designed for browsing a list of visual elements, namely a list of visual elements identified by indices n-4, n-3, n-2, n-1, n, n+1, n+2, n+3, n+4, ....

The visual elements may include any type of visual element displayable on a display area 2, such as images, clip art, photos, etc., or any combination thereof. In a variant, the visual elements are designed to represent any kind of electronic data, such as a film, a musical album, a journal, a newspaper, etc., or any group thereof. Thus, the visual elements are displayed on the display area 2 in a manner indicative of the electronic data they represent. In case of a film, musical album, journal, etc., the visual element includes a cover photo, for example. Accordingly, the process-controlled graphical user interface 1 provides for scrolling through a collection of data objects such as a list of films, musical albums, journals, newspapers, groups of films, groups of musical albums, groups of journals, groups of newspapers, etc. For example, the graphical user interface 1 is configured such that one or more of the visual elements may be selected by a user in order to play back the film or musical album represented by the visual element, display a journal or newspaper, start transmission of electronic data to another electronic device, display further information such as a summary, etc. A visual element may represent a group of films, grouped according to a content classification such as adventure, historical, drama, etc. A visual element may represent a group of musical albums, grouped according to a content classification such as classical, pop, country, etc. Any other classification may be used to group visual elements. The visual element may represent any other item such as a number, an address, a photo, a drawing, a game, etc., for example, or any group thereof.

Visual elements are stored in a memory of the computerized device 50 or a remote computer, connected to the computerized devise 50 via a telecommunication network. Each index n-4, n-3, n-2, n-1, n, n+1, n+2, n+3, n+4, ... defines a visual element stored in the memory. For example, visual elements are accessible through program pointers pointing to the respective location in the memory. In a variant, where the visual elements are stored remotely, for example on a server connected to the Internet, access to the visual element is defined through its index or link. In addition, electronic data represented by the visual elements, for example a film, a musical album, a journal, is stored in the memory of the computerized device 50 or remotely, such as on a server connected to the Internet.

The visual elements are arranged in a linear list according to their indices n-4, n-3, n-2, n-1, n, n+1, n+2, n+3, n+4, .... Thus, for example, in the list of visual elements, the visual element with index n-1 is preceding the visual element with index n, and the visual element with index n+1 is following the visual element with index n. In a variant, the visual elements are increasingly or decreasingly ordered according to any criteria, regarding the electronic data represented by the visual element, such as name, date, cost, relevance, etc. In another variant, the visual elements follow and precede each other randomly.

In the list of visual elements, the first visual element is identified by index 1, the second by index 2, the n-th visual element is identified by index n, etc. The number of visual elements in the list is N, wherein the N-th visual element is identified by index N. In particular, the number N of visual elements is large, such as dozens, hundreds, thousands, or more.

When displayed by the graphical user interface 1, the visual elements may have any shape or form, such as rectangular, oval, etc. In the following paragraphs, however, visual elements having a rectangular shape are described. The visual elements may be displayed by the graphical user interface 1 at a preferred size. For example, the visual element with index n is displayed at a larger size than other visual elements. In a variant, the visual elements are displayed in a shape or size which depends on the index of the visual element. For example, the visual element with index n is displayed in portrait orientation, whereas other visual elements are displayed in landscape orientation.

As shown schematically in Figure 1, the graphical user interface 1 is configured such that the n-th visual element n is displayed at a focus area 20 located at a centre location of the display area 2. The n-th visual element is referred to as the focus element.

Visual elements with indices n-4, n-3, n-2, n-1 preceding the focus element n are displayed outside the focus area 20 as non-focus elements, e.g. on the left hand side of (or above) the focus element n, and visual elements n+1, n+2, n+3, n+4 following the focus element n are displayed outside the focus area 20 as non-focus elements, e.g. on the right hand side of (or below) the focus element n. In the example of Figure 1, visual elements with indices n-3, n-1, n+1, n+3, i.e. visual elements having an odd offset to the focus element, are displayed outside the focus area 20 along a first presentation line 11, e.g. to the left and right hand sides of the focus element n. In this example, visual elements with indices n-4, n-2, n+2, n+4, i.e. visual elements having an even offset to the focus element n, are displayed outside the focus area 20 along a second presentation line l2, e.g. to the left and right hand sides of the focus element n. As shown in the example of Figure 1, the second presentation line l2 is arranged (essentially) parallel to and above the first presentation line l1.

Thus, on the first presentation line l1 , from left to right, the visual elements with indices n-3, n-1 (i.e. lower than the focus element n) are displayed on the left of the focus element n and the visual elements with indices n+1, n+3 (i.e. higher than the focus element n) are displayed on the right of the focus element n. Along the second presentation line 12 above the first presentation line l1, from left to right, the visual element with indices n-4, n-2 (i.e. lower than the focus element n) are displayed on the left side of the focus element n and the visual elements with indices n+2, n+4 (i.e. higher than the focus element n) are displayed on the right side of the focus element n.

The graphical user interface 1 shown in Figure 1 displays a total of nine visual elements in the display area 2. However, as indicated by dots preceding and following the visual elements, any number of visual elements may be displayed. In a variant, an odd number of visual elements is displayed, and on the left and the right side of the focus element n, the same number of visual elements are displayed. However, the number of visual elements displayed on the left and on the right hand sides of the focus element n may be different and/or varied.

Moreover, along the first presentation line l1, the visual element with index n-1 preceding the focus element n is displayed at a near distance nd on the left side of the focus element n. The visual element with index n+1 following the focus element n is displayed at a near distance nd on the right side of the focus element n. Along the second presentation line 12, the visual element with index n-2 preceding the visual element with index n-1 is displayed at the far distance fd on the left side of the focus element n. The visual element with index n+2 following the visual element with index n+1 is displayed at the far distance fd on the right side of the focus element n. The far distance fd is greater than the near distance nd.

As schematically shown in the example of Figure 1, visual elements that are not directly displayed on the left or right hand sides of the focus element n are displayed with a small distance sd between them, the small distance sd being smaller than the near and far distances nd, fd, for example. In an embodiment, the length of the distance sd between visual elements that are not directly adjacent to the focus element n varies depending on the position of the visual elements with respect to the focus element n. The farther away visual elements are positioned from the focus element n, the shorter the distance sd between these elements is set. In a variant, the distance sd between such elements is actually negative, i.e. these elements are positioned and displayed in a partially overlapping fashion. In the overlapping area, the visual element closer to the focus element n is placed on top of the visual element that is positioned farther away from the focus element n.

Thus, the visual elements n-4, n-3, n-2, n-1, n, n+1, n+2, n+3, n+4, ... are displayed by the graphical user interface 1 with different respective distances relative to the focus element n. The visual elements preceding n-4, n-3, n-2, n-1 and/or following n+1, n+2, n+3, n+4, ... the displayed focus element n are displayed outside the focus area 20, along a plurality of presentation lines l1, l2, ... that run through the focus area 20. The preceding and following visual n-4, n-3, n-2, n-1, n+1, n+2, n+3, n+4, ... are displayed on opposite sides of the displayed focus element n, respectively. Visual elements which are directly following each other in the list of visual elements are arranged on different presentation lines l1, l2, .... The visual elements are arranged on the presentation lines according to their position with respect to the focus element n in the list of visual elements, an element's distance to the focus element n increasing with every position farther away from the focus element n in the list of visual elements.

The actual measures of the near distance nd, far distance fd, and small distance sd are defined depending on the size of the display area 2, the size of the displayed visual elements, the size of the focus area 20, etc. For example, the near distance nd may be defined as a certain percentage, such as 10%, of the width of the focus element n displayed at the centre location of the display area 2, the far distance fd may be defined as a certain percentage, such as 20%, of the width of the n-th visual element, and the small distance sd may be defined as a certain percentage, such as 5%, of the width of the n-th visual element. Any other definition may be used. However, in any case, the near distance nd is smaller than the far distance fd. The small distance sd may be smaller than the near distance nd, it may be between the near distance nd and the far distance fd, or it may be larger than the far distance fd.

The graphical user interface 1 is designed such that a user can browse or scroll through the visual elements. Specifically, the graphical user interface 1 is configured to receive a user input, such as a shift left command, shift fast left command, shift right command, shift fast right command, delete command (e.g. delete right, delete left, and/or delete selection), insert command, page command, select command, set focus command, etc. The user input may be received on activation of a button such as an arrow key of a keyboard, or on activation of a scroll or swipe gesture on a touch screen, etc. The graphical user interface 1 is configured to rearrange the displayed visual elements according to the specific user input, as described in the following paragraphs.

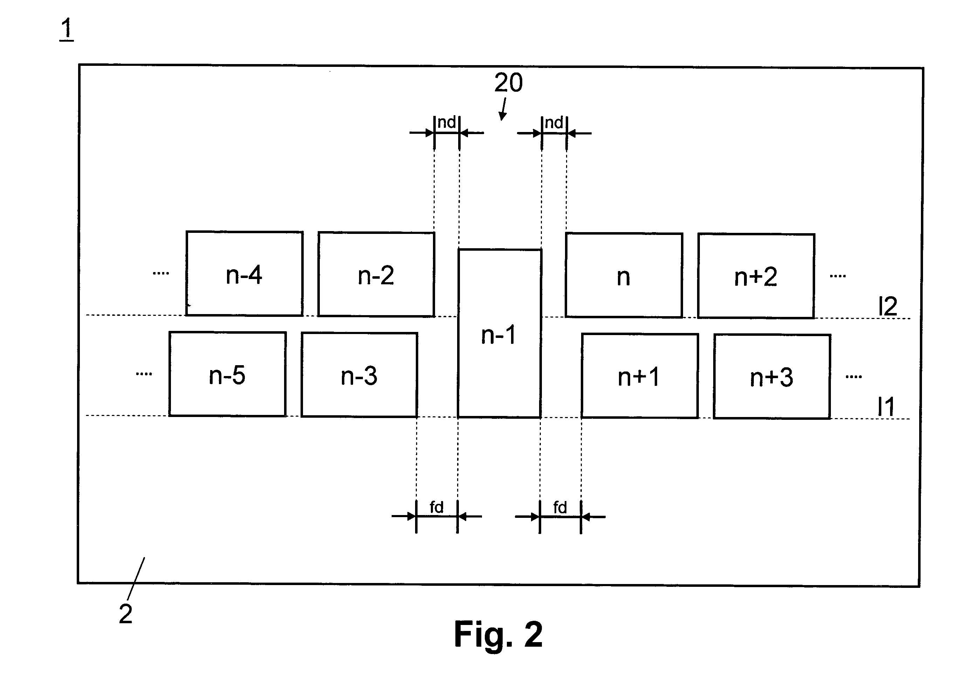

Figure 2 shows the visual elements displayed by the graphical user interface 1 after receipt of a shift left command, for example according to a swipe or scroll gesture on a touch screen. On receipt of the shift left command, focus is moved from visual element n to the new focus element n-1. Thus, at the centre location of the display area 2, the new focus element n-1 is displayed in the focus area 20. The visual element with index n is displayed outside the focus area 20, on the right side of the centre location, and the visual element with index n-2 is displayed outside the focus area 20, on the left side of the centre location. Both the visual element with index n and the visual element with index n-2 are displayed on the second presentation line l2 at a near distance nd to the focus element n-1. The visual element with index n-3 and the visual element with index n+1 are still displayed on the first line, but at a far distance fd from the focus element n-1. The remaining visual elements are displayed accordingly on the respective lines l1, 12 at a small distance sd from each other.

In the example shown in Figure 2, a total of nine visual elements are displayed, after the shift left command, the visual element with index n+4 is no longer displayed, instead the visual element with index n-5 is newly displayed on the left at a small distance sd from visual element with index n-3.

Through the shift left command, the visual element with index n-2 is displayed on the second presentation line l2 at a near distance nd left to the visual element with index n-1, and the visual element with index n-4 is displayed at a small distance sd left to the visual element with index n-2. In other words, on the second presentation line l2, the block of visual elements comprising the visual elements with indices n-4 and n-2 is moved from left to right, such that the distance of this block to the focus area 20 in the centre location decreases from a far distance fd to a near distance nd.

Other blocks of visual elements are moved accordingly. Thus, the rearrangement of the visual elements is limited to only those changes that are necessary, such as moving the visual element with index n-1, as the new focus element n-1, to the focus area 20 in the centre location, and moving the visual element with index n out of the centre outside the focus area 20, thereby keeping the noticeable visual effect for a user of the graphical user interface 1 to a minimum. The remaining visual elements are kept close to their original position, though, using the near distance nd and far distance fd as indicators, the user is kept clearly informed about the order of the visual elements in the list of visual elements.

The graphical user interface 1 described herein provides for a compact and clearly perceivable display of a list of visual elements such that more content can be displayed in the display area 2 at the same time, because the visual elements are arranged on several lines, wherein the order of the visual elements is clearly perceivable, because their distance to each other corresponds to their order in the list of visual elements.

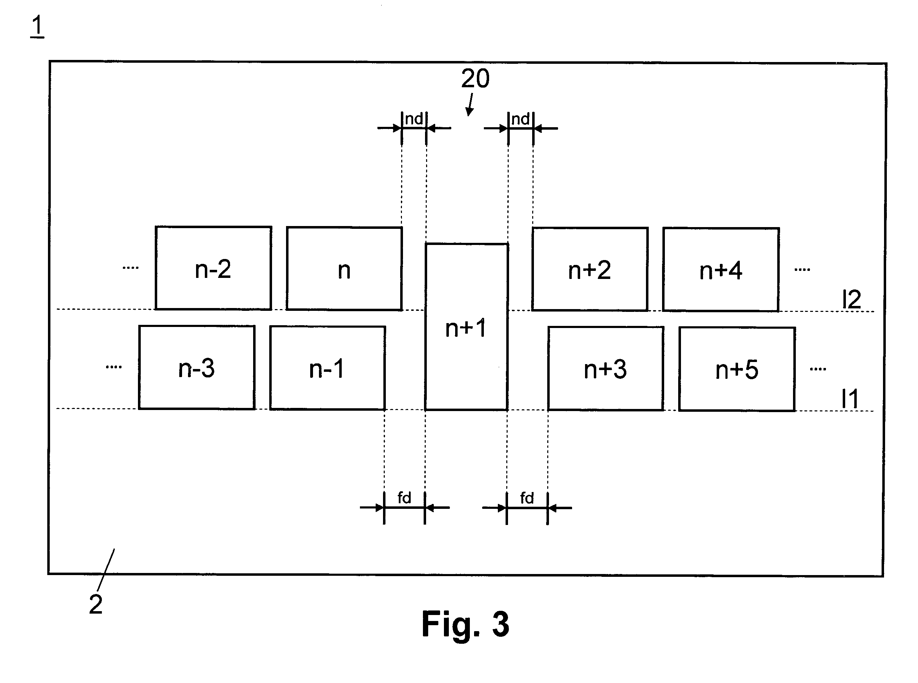

Figure 3 shows the visual elements displayed by the graphical user interface 1 after receipt of a shift right command, starting from the graphical user interface 1 as shown in Figure 1. The shift right command is received, for example, through a respective swipe or scroll gesture on a touch screen. On receipt of the shift right command, focus is moved from visual element n to the visual element n+1. Thus, at the centre location of the display area 2, the new focus element n+1 is displayed in the focus area 20. The visual element with index n is displayed outside the focus area 20, on the left side of the centre location, and the visual element with index n+2 is displayed outside the focus area 20, on the right of the centre location. Both the visual element with index n and the visual element with index n+2 are displayed on the second presentation line l2 at a near distance nd to the focus element n+1. The visual element with index n-1 and the visual element with index n+3 are still displayed on the first presentation line l1, but at a far distance fd from the focus element n+1. The remaining visual elements are displayed accordingly on the respective lines l1, l2 at a small distance sd from each other.

With a shift fast left or shift fast right command, entered by the user by way of a correspondingly fast swipe gesture, for example, the focus is not merely moved to one of the neighboring visual elements of the current focus element, but it is moved to a visual element that is positioned at a greater distance to the current focus element n-1 in the list of visual elements. The faster the swipe gesture is executed by the user, the farther away from the current focus element the focus is moved.

Upon receipt of a selection command specifying a selected one of the visual elements as the new focus element, the graphical user interface 1 displays this newly selected focus element in the focus area 20 and rearranges the remaining visual elements outside the focus area 20 as outlined above.

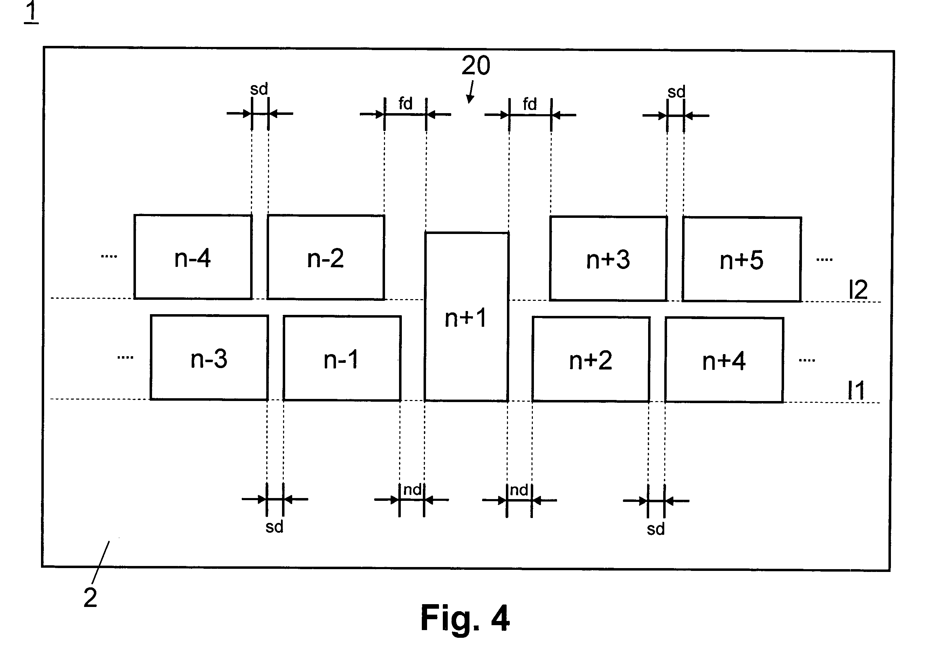

Figure 4 shows the visual elements displayed by the graphical user interface 1 after receipt of a delete right command, starting from the graphical user interface 1 as shown in Figure 1. On receipt of the delete right command, the focus element n is replaced by the focus element n+1. Thus, at the centre location of the display area 2, the focus element n+1 is displayed in the focus area 20. The visual element with index n is removed from the list of visual elements. The visual element with index n is not displayed anymore. The visual elements n-1, n-2, n-3, n-4 arranged on the left hand side of the focus area 20 remain unchanged, in the same position as before the delete operation (as shown in Figure 1). Thus, the visual element with index n-1 is still displayed on the first presentation line l1 at a near distance nd from the new focus element n+1. The visual elements n+2, n+3, n+4, n+5 arranged on the right hand side of the focus area 20 are rearranged, however. The visual element with index n+2 is rearranged and displayed on the first presentation line l1 at a near distance nd to the focus element n+1. The visual element with index n+3 is rearranged and displayed on the second presentation line 12 at a far distance fd from the focus visual element n+1. The remaining visual elements n+4, n+5 are displayed accordingly on the respective lines l1, l2 at a small distance sd from the visual elements n+2 or n+3, respectively. One skilled in the art will understand that a delete left command is implemented and works accordingly.

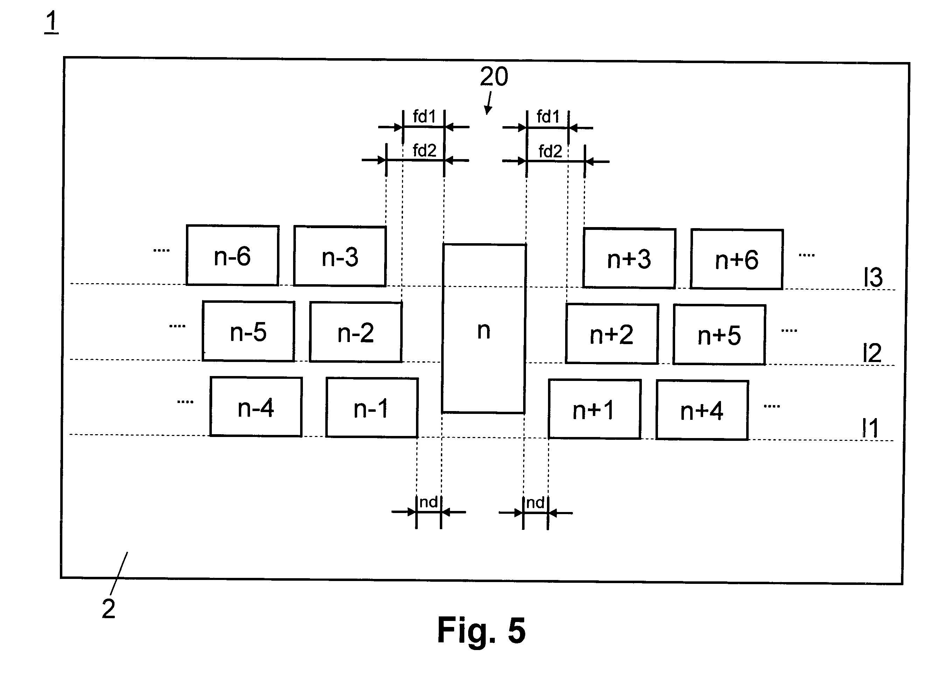

Figure 5 shows schematically a graphical user interface having visual elements displayed along three presentation lines l1, l2, l3. The first presentation line l1 is at the bottom, the second presentation line l2 is in the middle, and the third line l3 is at the top. The first presentation line l1, the second presentation line l2, and the third presentation line l3 are defined in a cyclic group such that for each presentation line l1, l2, 13 a consecutive presentation line l2, l3, l1 is defined. The second presentation line 12 is the consecutive line to the first presentation line l1, the third presentation line l3 is the consecutive line to the second presentation line l2, and the first presentation line l1 is the consecutive line to the third line 13. First presentation line l1, second presentation line l2, and third presentation line l3 run through the focus area 20 and, thus, extend on both sides of the focus element n, which is displayed in the focus area 20 at the centre location of the display area 2. On the first presentation line 11, starting from visual elements with indices n-1, n+1, every third visual element is displayed. On the second presentation line l2, starting from visual elements with indices n-2, n+2, every third visual element is displayed. And on the third presentation line 13, starting from visual elements with indices n-3, n+3, every third visual element is displayed. In other words, the consecutive visual elements n+1, n+2, n+3 are displayed along the consecutive first presentation line 11, second presentation line 12, and third presentation line l3. The consecutive visual elements n-1, n-2, n-3 are displayed along the consecutive first presentation line l1, second presentation line 12, and third presentation line l3. Moreover, cyclically, visual elements n+4, n+5, n+6 are displayed consecutively along the first, second, and third presentation line l1, l2, 13, as well as visual elements n-4, n-5, n-6, which are also displayed cyclically along the consecutive first, second, and third presentation line l1, l2, l3. The distance between the focus element n, in the focus area 20, and the visual elements displayed outside the focus area 20 on the three lines is increasing, according to the position of the visual element with respect to the focus element in the list of visual elements. Thus, the visual elements with indices n-1, n+1 are displayed at a near distance nd from the focus element n, the visual elements with indices n-2, n+2 are displayed at a first far distance fd1 from the focus element n, and the visual elements with indices n-3, n+3 are displayed at a second far distance fd2 from the focus element n. The near distance nd is smaller than the first far distance fd 1, which is smaller than the second far distance fd2. Further visual elements of the list of visual elements are displayed accordingly.

As is evident from Figure 5, the visual elements may be displayed not only along three neighboring (consecutive) presentation lines l1, l2, l3, but they may be displayed along any number m of neighboring (consecutive) presentation lines l1, l2, ..., lm. The presentation lines are arranged essentially parallel and run in horizontal or vertical direction. One skilled in the art will understand, however, that other (curved) forms of presentation lines are possible, without deviating from the scope of the claims.

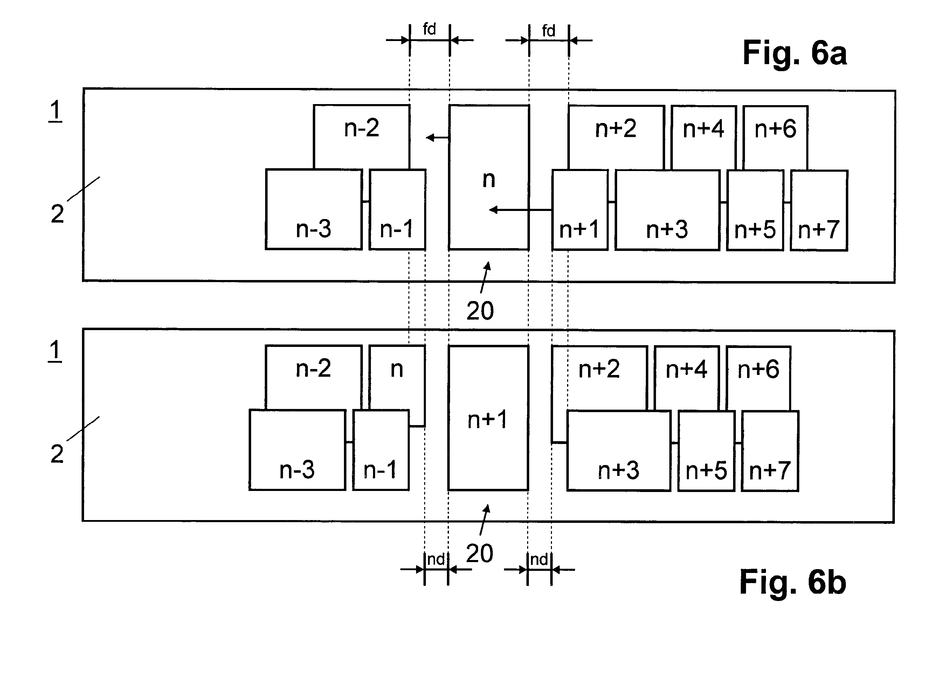

Figures 6a, 6b show schematically a graphical user interface 1, where visual elements are displayed in an overlapping fashion. The visual elements are displayed along two presentation lines. As shown in Figure 6a, visual elements having indices n-3, n-1, n+, n+3, n+5, n+7 are covering partly visual elements with indices n-2, n+2, n+4, n+6. The density or compactness of displayed elements is further increased. In a variant, a title is displayed together with each visual elements, wherein the title is added at the top or bottom area used to display the visual element, such that the title always remains visible.

In a variant, in case the focus element n represents a category of electronic data, if the focus element n is selected by the user for further action, through an o.k. or up command, an additional line of visual elements may be displayed, in addition to presentation lines already displayed. In a variant, a plurality of additional presentation lines with visual elements is displayed. The focus element is changed from a visual element representing a category of electronic data, such as a category of films, into a visual element representing specific electronic data, such as specific films in a respective category. Focus of the graphical user interface is then transferred to the additionally displayed presentation lines. Upon a back or down command, the additionally displayed line or lines are removed and focus of the graphical user interface is transferred back to the originally displayed lines. The focus element is changed back from a visual element representing specific electronic data into an element representing a category.

Figure 8 shows schematically a possible sequence of steps performed by one or more processors of the computerized device 50 for controlling the graphical user interface 1 for browsing a list of visual elements ..., n-2, n-1, n, n+1, n+2, ....

In step S1, a plurality of consecutive visual elements ..., n-2, n-1, n, n+1, n+2, ... of the list are displayed by displaying one of the consecutive visual elements, selected as focus element n, in a focus area 20 of the graphical user interface 1, and displaying the consecutive visual elements ..., n-2, n-1, n+1, n+2, ..., preceding or following the focus element n in the list, outside the focus area 20 at display positions arranged along two or more presentation lines l1, l2, ... running through the focus area 20, the display positions relative to the focus area 20 being representative of a visual element's position in the list with respect to the focus element n.

In step S20, a user input is received.

In step S21, the focus is moved to a different visual element n-1, n+1.

In step S22, in response to the user input, the different visual element n-1, n+1 is displayed in the focus area 20 and the consecutive visual elements ..., n-2, n-1, n, n+1, n+2, ..., preceding or following the different visual element n-1, n+1 in the list, outside the focus area 20 at rearranged display positions on the presentation lines l1, l2, ..., the rearranged display positions relative to the focus area 20 being representative of a visual element's position in the list with respect to the different visual element n-1, n+1.

## Claims

1. A graphical user interface (1) for browsing a list of visual elements (n-2, n-1, n, n+1, n+2), the graphical user interface (1) being configured to:
display a plurality of consecutive visual elements (n-2, n-1, n, n+1, n+2) of the list by displaying one of the consecutive visual elements, selected as focus element (n), in a focus area (20) of the graphical user interface (1), and displaying the consecutive visual elements (n-2, n-1, n+1, n+2), preceding or following the focus element (n) in the list, as non-focus elements (n-2, n-1, n+1, n+2) outside the focus area (20) at display positions arranged along two or more presentation lines (l1, l2, l3) running through the focus area (20), the display positions relative to the focus area (20) being representative of a visual element's position in the list with respect to the focus element (n);
receive a user input which moves focus to a different visual element (n-1, n+1); and
display, in response to the user input, the different visual element (n-1, n+1) in the focus area (20) and the consecutive visual elements (n-2, n-1, n, n+1, n+2), preceding or following the different visual element (n-1, n+1) in the list, as non-focus elements (n-2, n-1, n, n+1, n+2) outside the focus area (20) at rearranged display positions along the presentation lines (l1, l2, l3), the rearranged display positions relative to the focus area (20) being representative of a visual element's position in the list with respect to the different visual element (n-1, n+1).

2. The graphical user interface (1) of claim 1, further configured to arrange the non-focus elements in a cyclical fashion on the presentation lines (l1, l2, l3), a cycle being defined by the number of presentation lines (l1, l2, l3) and a corresponding number of consecutive visual elements (n-2, n-1, n+1, n+2) in the list, which are each arranged on a different one of the presentation lines (l1, l2, l3) using a defined order.

3. The graphical user interface (1) of one of claims 1 or 2, further configured to display the non-focus elements (n-2, n-1, n+1, n+2) with a distance to the focus element (n) that reflects for a particular visual element (n-2, n-1, n+1, n+2) its position in the list with respect to the focus element (n), the distance increasing with every position farther away from the focus element (n) in the list of visual elements (n-2, n-1, n, n+1, n+2).

4. The graphical user interface (1) of one of claims 1 to 3, further configured to move focus, in response to the user input, to the visual element directly preceding (n-1) or directly following (n+1) the focus element (n).

5. The graphical user interface (1) of one of claims 1 to 4, further configured to move focus, in response to the user input, to a selected one of the non-focus elements (n-2, n-1, n+1, n+2).

6. The graphical user interface (1) of one of claims 1 to 5, further configured to display the focus element (n) in a focus area (20) positioned in a central location of the graphical user interface (1) with a size larger than that of the non-focus elements (n-2, n-1, n+1, n+2).

7. The graphical user interface (1) of one of claims 1 to 6, further configured to display the non-focus elements (n-2, n-1, n+1, n+2) at display positions arranged along essentially parallel presentation lines (l1, l2, l3) in a partially overlapping fashion.

8. The graphical user interface (1) of one of claims 1 to 7, further configured to receive a user input which deletes the focus element (n) in the list and moves focus to an adjacent visual element, directly preceding or directly following (n+1) the focus element (n) prior to its deletion, and to display, in response to the user input, said adjacent visual element (n+1) in the focus area (20) and the remaining consecutive visual elements, preceding or following said adjacent visual element (n-4, n-3, n-2, n-1, n+2, n+3, n+4, n+5) in the list, as non-focus elements outside the focus area (20).

9. A method of controlling a graphical user interface (1) for browsing a list of visual elements (n-2, n-1, n, n+1, n+2), the method comprising:
displaying a plurality of consecutive visual elements (n-2, n-1, n, n+1, n+2) of the list by displaying one of the consecutive visual elements, selected as focus element (n), in a focus area (20) of the graphical user interface (1), and displaying the consecutive visual elements (n-2, n-1, n+1, n+2), preceding or following the focus element (n) in the list, as non-focus elements (n-2, n-1, n+1, n+2) outside the focus area (20) at display positions arranged along two or more presentation lines (l1, l2, l3) running through the focus area (20), the display positions relative to the focus area (20) being representative of a visual element's position in the list with respect to the focus element (n);
receiving a user input which moves focus to a different visual element (n-1, n+1); and
displaying, in response to the user input, the different visual element (n-1, n+1) in the focus area (20) and the consecutive visual elements (n-2, n-1, n, n+1, n+2),
preceding or following the different visual element (n-1, n+1) in the list, as non-focus elements (n-2, n-1, n, n+1, n+2) outside the focus area (20) at rearranged display positions on the presentation lines (l1, l2, l3), the rearranged display positions relative to the focus area (20) being representative of a visual element's position in the list with respect to the different visual element (n-1, n+1).

10. The method of claim 9, wherein the method further comprises arranging the non-focus elements in a cyclical fashion on the presentation lines (l1, l2, l3), a cycle being defined by the number of presentation lines (l1, l2, l3) and a corresponding number of consecutive visual elements (n-2, n-1, n+1, n+2) in the list, which are each arranged on a different one of the presentation lines (l1, l2, l3) using a defined order.

11. The method of one of claims 9 or 10, wherein the method further comprises displaying the non-focus elements (n-2, n-1, n+1, n+2) with a distance to the focus element (n) that reflects for a particular visual element (n-2, n-1, n+1, n+2) its position in the list with respect to the focus element (n), the distance increasing with every position farther away from the focus element (n) in the list of visual elements (n-2, n-1, n, n+1, n+2).

12. The method of one of claims 9 to 11, wherein the method further comprises moving focus, in response to the user input, to the visual element directly preceding (n-1) or directly following (n+1) the focus element (n).

13. The method of one of claims 9 to 12, wherein the method further comprises moving focus, in response to the user input, to a selected one of the non-focus elements (n-2, n-1, n+1, n+2).

14. The method of one of claims 9 to 13, wherein the method further comprises displaying the focus element (n) in a focus area (20) positioned in a central location of the graphical user interface (1) with a size larger than that of the non-focus elements (n-2, n-1, n+1, n+2).

15. The method of one of claims 9 to 14, wherein the method further comprises displaying the non-focus elements (n-2, n-1, n+1, n+2) at display positions arranged along essentially parallel presentation lines (l1, l2, l3) in a partially overlapping fashion.

16. The method of one of claims 9 to 15, wherein the method further comprises receiving a user input which deletes the focus element (n) in the list and moves focus to an adjacent visual element, directly preceding or directly following (n+1) the focus element (n) prior to its deletion, and displaying, in response to the user input, said adjacent visual element (n+1) in the focus area (20) and the remaining consecutive visual elements, preceding or following said adjacent visual element (n-4, n-3, n-2, n-1, n+2, n+3, n+4, n+5) in the list, as non-focus elements outside the focus area (20).

17. A computer program product comprising a non-transitory computer-readable medium having stored thereon computer program code for controlling one or more processors such that the processors generate a graphical user interface (1) for browsing a list of visual elements (n-2, n-1, n, n+1, n+2), the graphical user interface (1) configured to:
display a plurality of consecutive visual elements (n-2, n-1, n, n+1, n+2) of the list by displaying one of the consecutive visual elements, selected as focus element (n), in a focus area (20) of the graphical user interface (1), and displaying the consecutive visual elements (n-2, n-1, n+1, n+2), preceding or following the focus element (n) in the list, as non-focus elements (n-2, n-1, n+1, n+2) outside the focus area (20) at display positions arranged along two or more presentation lines (l1, l2, 13) running through the focus area (20), the display positions relative to the focus area (20) being representative of a visual element's position in the list with respect to the focus element (n);
receive a user input which moves focus to a different visual element (n-1, n+1); and
display, in response to the user input, the different visual element (n-1, n+1) in the focus area (20) and the consecutive visual elements (n-2, n-1, n, n+1, n+2), preceding or following the different visual element (n-1, n+1) in the list, as non-focus elements (n-2, n-1, n, n+1, n+2) outside the focus area (20) at rearranged display positions along the presentation lines (l1, l2, l3), the rearranged display positions relative to the focus area (20) being representative of a visual element's position in the list with respect to the different visual element (n-1, n+1).
